# EUROPÄISCHE PATENTANMELDUNG

(11) **EP 1 598 584 A1**
(43) Veröffentlichungstag der Anmeldung: **23.11.2005**
(21) Anmeldenummer: 04011688.1
(22) Anmeldetag: 17.05.2004
(51) Int. Cl.: F16L 19/02

(54) **Vorrichtung zum Verbinden von Rohrleitungselementen**

(71) Anmelder: SIEMENS AKTIENGESELLSCHAFT, 80333 München (DE)
(72) Erfinder: Brunnstein, Wolfgang, 45739 Oer-Erkenschwick (DE); Preissner, Klaus, 45470 Muehlheim a.d. Ruhr (DE)

(57) **Zusammenfassung**

Die Erfindung betrifft eine Vorrichtung zum Verbinden eines ersten Rohrleitungselementes 3 mit einem zweiten Rohrleitungselement 6, wobei das erste Rohrleitungselement 3 in einem seiner Endbereiche 4 einen radial nach außen verlaufenden ersten Vorsprung 5 zur Anlage an einem Ende 8 des zweiten Rohrleitungselements 6 aufweist, eine Überwurfmutter 7 vorgesehen ist, die an ihrem einen Ende 8 ein Gewinde 9 zum Eingreifen in einen Gegengewinde 12 des zweiten Rohrleitungselementes 6 und an ihrem anderen Ende 10 einen zweiten, das erste Rohrleitungselement 3 umgreifenden Vorsprung 11 aufweist, und zwischen dem ersten Vorsprung 5 und dem zweiten Vorsprung 11 der Überwurfmutter 7 eine Ringeinrichtung 13 vorgesehen ist, wobei die Ringeinrichtung 13 aus einem Ring 14 aus elastischem Material und einem Reibring 15 zusammengesetzt ist, die jeweils an einer Umfangsfläche 16 des ersten Rohrleitungselementes 3 angebracht sind.

## Beschreibung

Die Erfindung betrifft eine Vorrichtung zum Verbinden eines ersten Rohrleitungselementes mit einem zweiten Rohrleitungselement, wobei das erste Rohrleitungselement in einem seiner Endbereiche einen radial nach außen verlaufenden Vorsprung zur Anlage an einem Ende des zweiten Rohrleitungselementes aufweist, eine Überwurfmutter vorgesehen ist, die an ihrem einen Ende ein Gewinde zum Eingreifen in ein Gegengewinde des zweiten Rohrleitungselementes und an ihrem anderen Ende einen zweiten, das erste Rohrleitungselement umgreifenden Vorsprung aufweist, und zwischen dem ersten Vorsprung des ersten Rohrleitungselementes und den zweiten Vorsprung der Überwurfmutter eine Ringeinrichtung vorgesehen ist.

Bei der Verbindung von zwei Rohrleitungselementen stehen zwei Aspekte im Vordergrund. Zum einen muss diese Verbindung in der Regel lösbar ausgebildet sein. Zum anderen sollte diese Verbindung möglichst dicht sein. Unter Rohrleitungselementen sollen zum Beispiel Leitungen oder Schläuche oder ähnliches zu verstehen sein.

Bei einer bekannten Ausführungsform einer Verbindung von zwei Rohrleitungselementen wird eine Überwurfmutter eingesetzt. Ein erstes Rohrleitungselement weist hierbei einen radial nach außen verlaufenden Vorsprung auf. Das zweite Rohrleitungselement weist ein Gewinde auf. Die Überwurfmutter greift in ein Gegengewinde des zweiten Rohrleitungselementes ein. Zwischen dem Vorsprung und der Überwurfmutter wurden bislang gemäß dem Stand der Technik metallische Federringe als Ringeinrichtungen eingesetzt.

Der Einsatz von metallischen Federringen führt zu einem gewissen Abrieb, der störende kleine Metallspäne liefert.

Aufgabe der vorliegenden Erfindung ist es, eine gut lösbare und dichte Vorrichtung zum Verbinden von zwei Rohrleitungselementen anzugeben.

Die Aufgabe wird gelöst durch eine Vorrichtung zum Verbinden eines ersten Rohrleitungselementes mit einem zweiten Rohrleitungselement, wobei das erste Rohrleitungselement in einem seiner Endbereiche einen radial nach außen verlaufenden Vorsprung zur Anlage an einem Ende des zweiten Rohrleitungselementes aufweist, eine Überwurfmutter vorgesehen ist, die an ihrem einen Ende ein Gewinde zum Eingreifen in ein Gegengewinde des zweiten Rohrleitungselementes und an ihrem anderen Ende einen zweiten, das erste Rohrleitungselement umgreifenden Vorsprung aufweist, und zwischen dem ersten Vorsprung des ersten Rohrleitungselements und dem zweiten Vorsprung der Überwurfmutter eine Ringeinrichtung vorgesehen ist, wobei die Ringeinrichtung aus einem Ring aus elastischem Material und einem Reibring zusammengesetzt ist, die jeweils an einer Umfangsfläche des ersten Rohrleitungselementes angebracht sind.

Der Vorteil der Erfindung besteht insbesondere darin, dass die Ringeinrichtung aus einem Ring aus elastischem Material und einem Reibring zusammengesetzt ist, wodurch erstens eine entsprechende Rückstellkraft in Richtung der Überwurfmutter entsteht und zweitens die Bildung von störenden Metallspänen durch Abrieb weitestgehend verhindert wird.

In einer vorteilhaften Ausgestaltung der Erfindung besteht der Ring aus einem Fluorelastomer, insbesondere Viton.

Das Material Viton ist zum einen elastisch und besitzt zum anderen eine hohe Rückverformungseigenschaft. Darüber hinaus ist Viton leicht zu bearbeiten.

In einer weiteren vorteilhaften Ausgestaltung wird der Ring und/oder der Reibring an dem ersten Leitungselement durch Ultraschweißen, Kleben oder Vulkanisieren angebracht.

Durch diese Maßnahmen ist es möglich, die Dichtheit der Vorrichtung zu erhöhen. Ein störendes Verkanten oder Verrutschen wird dadurch weitestgehend vermieden.

In einer weiteren vorteilhaften Ausgestaltung ist der Reibring aus Metall ausgebildet.

Durch die Wahl von Metall als Material für den Reibring ist es möglich, ein hohes Drehmoment auf die Überwurfmutter zu übertragen.

In einer weiteren vorteilhaften Ausgestaltung ist das Profil der Berührungsfläche zwischen dem Reibring und dem zweiten Vorsprung der Überwurfmutter gemäß DIN 6796 ausgebildet.

Dadurch wird eine Verhakung der Überwurfmutter mit dem Reibring vergrößert. Die Reibung zwischen dem zweiten Vorsprung der Überwurfmutter und dem Reibring wird somit vergrößert. Dadurch wird Dichtheit der Vorrichtung verbessert. Darüber hinaus kann ein sehr großes Drehmoment auf die Überwurfmutter übertragen werden.

In einer weiteren vorteilhaften Ausgestaltung wird in dem zweiten Vorsprung ein Dichtungsring zum Dichten der Verbindung zwischen dem ersten Leitungselement und dem zweiten Leitungselement angeordnet.

Durch diese Maßnahme wird die Dichtheit der Vorrichtung ebenfalls erhöht. Darüber hinaus wird verhindert, dass evtl.

Fremdpartikel von den Rohrleitungselementen zwischen der Überwurfmutter und dem ersten Rohrleitungselement austreten.

In einer weiteren vorteilhaften Ausgestaltung besteht der Dichtungsring aus einem Fluorelastomer, insbesondere Viton.

Ein Fluorelastomer, insbesondere Viton lässt sich sehr gut bearbeiten und ist in einem großen Temperaturbereich einsetzbar.

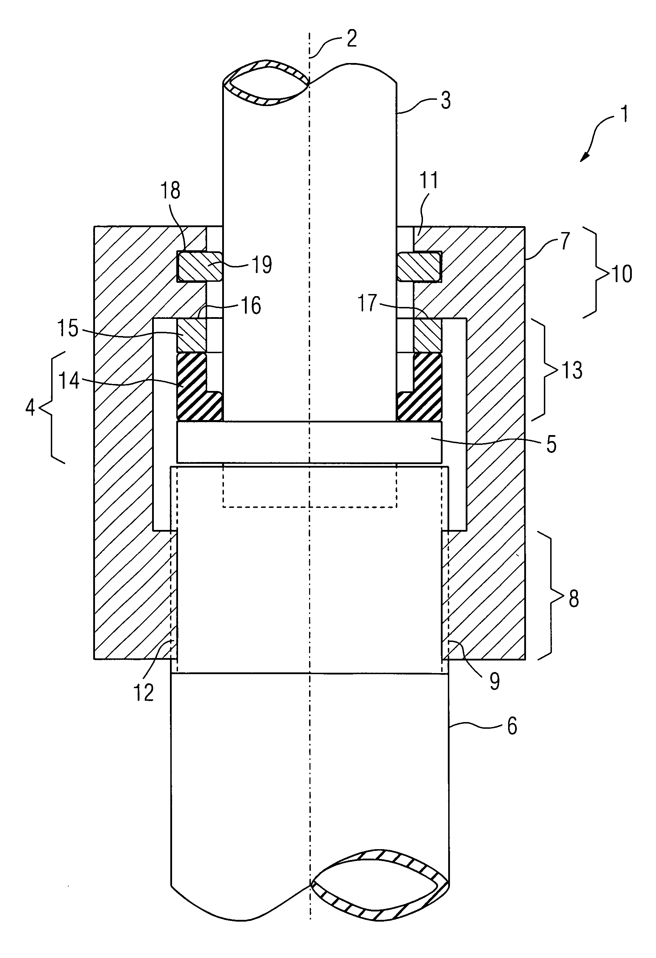

Ein Ausführungsbeispiel der Erfindung wird anhand der einzigen Figur dargestellt.

Dabei zeigt die einzige Figur einen Schnitt durch eine Vorrichtung zum Verbinden von zwei Rohrleitungselementen.

In der einzigen Figur ist eine Vorrichtung 1 zum Verbinden von zwei Rohrleitungselementen 3,6 dargestellt. Ein um eine Symmetrieachse 2 angeordnetes erstes Rohrleitungselement 3 weist einen in seinem Endbereich 4 radial nach außen verlaufenden Vorsprung 5 zur Anlage an einem Ende eines zweiten Rohrleitungselementes 6 auf. Eine Überwurfmutter 7 ist derart ausgebildet, dass sie an einem ersten Ende 8 ein Gewinde 9 aufweist. An ihrem zweiten Ende 10 weist die Überwurfmutter 7 einen zweiten Vorsprung 11 auf, der derart ausgebildet ist, dass er das erste Rohrleitungselement 3 umgreift.

Das zweite Rohrleitungselement 6 ist mit einem Gegengewinde 12 ausgebildet, das in das Gewinde 9 der Überwurfmutter 7 eingreift. Ein Drehen der Überwurfmutter 7 führt dazu, dass der zweite Vorsprung 11 in Richtung des ersten Vorsprunges 5 bewegt wird.

Zwischen dem ersten Vorsprung 5 und dem zweiten Vorsprung 11 ist eine Ringeinrichtung 13 vorgesehen. Die Ringeinrichtung 13 weist einen Ring 14 aus elastischem Material und einen Reibring 15 auf, wobei der Ring 14 dem ersten Vorsprung 5 und der Reibring 15 dem zweiten Vorsprung 11 zugewandt ist.

Der Ring 14 und der Reibring 15 sind einander benachbart jeweils an einer Umfangsfläche 16 des ersten Rohrleitungselementes 3 angebracht.

Der Ring 14 besteht hierbei aus einem Fluorelastomer. Insbesondere besteht der Ring 14 aus Viton.

In alternativen Ausführungsformen wird der Ring 14 und/oder der Reibring 15 an dem ersten Leitungselement 3 durch Ultraschweißen, Kleben oder durch Vulkanisieren angebracht.

Der Reibring 15 besteht aus dem Material Metall. Das Profil der Berührungsfläche 17 zwischen dem Reibring 15 und dem zweiten Vorsprung 11 der Überwurfmutter 7 ist gemäß DIN 6796 ausgebildet.

In ergänzten Ausführungsformen kann die Überwurfmutter 7 auf der Innenseite des zweiten Vorsprungs 11 mit einer Ausnehmung 18 zum Aufnehmen eines Dichtungsringes 19 ausgebildet werden.

Der Dichtungsring 19 kann aus einem Fluorelastomer bestehen. Insbesondere kann der Dichtungsring 19 aus dem Material Viton bestehen.

## Patentansprüche

1. Vorrichtung zum Verbinden eines ersten Rohrleitungselementes (3) mit einem zweiten Rohrleitungselement (6), wobei das erste Rohrleitungselement (3) in einem seiner Endbereiche (4) einen radial nach außen verlaufenden Vorsprung (5) zur Anlage an einem Ende des zweiten Rohrleitungselementes (6) aufweist,
eine Überwurfmutter (7) vorgesehen ist, die an ihrem einen Ende (8) ein Gewinde (9) zum Eingreifen in ein Gegengewinde (12) des zweiten Rohrleitungselementes (6) und an ihrem anderen Ende (10) einen zweiten, das erste Rohrleitungselement (3) umgreifenden Vorsprung (11) aufweist, und
zwischen dem ersten Vorsprung (5) des ersten Rohrleitungselementes (3) und dem zweiten Vorsprung (11) der Überwurfmutter (7) eine Ringeinrichtung (13) vorgesehen ist,
**dadurch gekennzeichnet, dass**
die Ringeinrichtung (13) aus einem Ring (14) aus elastischem Material und einem Reibring (15) zusammengesetzt ist, die jeweils an einer Umfangsfläche (16) des ersten Rohrleitungselementes (3) angebracht sind.

2. Vorrichtung nach Anspruch 1,
**dadurch gekennzeichnet, dass**
der Ring (14) aus einem Fluorelastomer, insbesondere Viton besteht.

3. Vorrichtung nach Anspruch 1 oder 2,
**dadurch gekennzeichnet, dass**
der Ring (14) und/oder der Reibring (15) an dem ersten Leitungselement (3) durch Ultraschweißen angebracht sind.

4. Vorrichtung nach Anspruch 1 oder 2,
**dadurch gekennzeichnet, dass**
der Ring (14) und/oder der Reibring (15) an dem ersten Leitungselement (3) durch Kleben angebracht sind.

5. Vorrichtung nach Anspruch 1 oder 2,
**dadurch gekennzeichnet, dass**
der Ring (14) und/oder der Reibring (15) an dem ersten Leitungselement (3) durch Vulkanisieren angebracht sind.

6. Vorrichtung nach einem der Ansprüche 1 - 5,
**dadurch gekennzeichnet, dass**
der Reibring (15) aus Metall ist.

7. Vorrichtung nach Anspruch 6,
**dadurch gekennzeichnet, dass**
die Berührungsfläche (16) zwischen dem Reibring (15) und dem zweiten Vorsprung (11) der Überwurfmutter (7) ein Profil gemäß DIN 6796 aufweist.

8. Vorrichtung nach einem der vorhergehenden Ansprüche,
**dadurch gekennzeichnet, dass**
in dem zweiten Vorsprung (11) ein Dichtungsring (19) zum Dichten der Verbindung zwischen dem ersten Leitungselement (3) und dem zweiten Leitungselement (6) angeordnet ist.

9. Vorrichtung nach Anspruch 8,
**dadurch gekennzeichnet, dass**
der Dichtungsring (19) aus einem Fluorelastomer besteht.

10. Vorrichtung nach Anspruch 9,
**dadurch gekennzeichnet, dass**
das Fluorelastomer das Material Viton ist.
